(19) Europäisches Patentamt

European Patent Office

Office européen des brevets

(11) **EP 1 498 692 A1**

(12) **EUROPEAN PATENT APPLICATION**

(43) Date of publication:
**19.01.2005 Bulletin 2005/03**

(51) Int Cl.7: **G01C 19/56**

(21) Application number: **03405552.5**

(22) Date of filing: **18.07.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(71) Applicant: **Eidgenössische Technische Hochschule Zürich**
**8092 Zürich (CH)**

(72) Inventors:
• **Nakash, Ronen Dr. Eidg. TH Zürich**
  **Inst. Mech. Sys**
  **8092 Zürich (CH)**

• **Dual, Jürg Dr.**
  **8126 Zumikon (CH)**
• **Blunier, Stefan Dr.**
  **8157 Diesldorf (CH)**

(74) Representative: **Clerc, Natalia et al**
**Isler & Pedrazzini AG**
**Postfach 6940**
**8023 Zürich (CH)**

(54) **Gyroscope and method for determining angular motion**

(57) A gyroscope is disclosed. In one embodiment, the gyroscope comprises a first elongated elastic member (301) and a second elongated elastic member (302) which is oriented perpendicular to the first member and connected to the center of the first member (301) at one end. Each end of the first member (301) is connected to an anchor (303). The first member (301) performs flexural vibrations in an actuation direction. In the presence of angular motion, a flexural vibration of the second member perpendicular to the actuation direction is induced. In a second embodiment, the gyroscope comprises a single elongated elastic member (101) capable of flexural vibration in two directions. A device combining these gyroscopes and methods of operating them are also disclosed. Furthermore, a method for determining the angular velocity and angular acceleration vectors is described.

Fig. 4

**Description**

<u>Technical field</u>

The invention relates to a gyroscope, preferably a micromechanical gyroscope, and a method for determining angular motion taking advantage of such a gyroscope.

<u>Background of the invention</u>

A gyroscope is a device for determining angular motion, specifically, the angular velocity vector or angular acceleration vector or specific components of these. A micromechanical gyroscope is a gyroscope which can be fabricated by micromachining techniques known from solid-state electronics, such as photolithographic etching techniques, which allows production at low cost. Micromechanical gyroscopes are usually essentially planar structures mounted on or embedded in a substrate, often a mono- or polycrystalline silicon substrate.

Several designs of micromechanical gyroscopes for measuring components of the angular velocity vector are known, including so-called tuning-fork gyroscopes. Such a tuning-fork gyroscope is disclosed in U.S. patent No. 6,257,059. The device is essentially planar and comprises two rigid masses suspended from anchor points by flexures, forced to vibrate simultaneously in opposite directions using so-called comb drives. The masses are suspended in such a way that they can vibrate both in the direction of the forcing comb drives and in an out-of-plane direction. By the Coriolis force induced by an in-plane component of the angular velocity vector perpendicular to the driving direction, the masses start to vibrate out of plane. This out-of-plane movement is picked up by suitable electrodes. The same document also discloses a tuning-fork gyroscope designed for measuring the out-of-plane component of the angular velocity vector. For this, the flexures allow movement of the masses in an in-plane direction perpendicular to the driving direction, but no out-of-plane movements. By the Coriolis force induced by an out-of-plane angular velocity component, the masses start to vibrate along the in-plane direction perpendicular to the driving direction. Again, this vibration is picked up through capacitance changes. Such a device is relatively complicated and delicate because of the flexures needed for suspending the masses and because the two parts of the tuning fork need to have exactly the same dimensions for the device to work accurately.

Another micromechanical gyroscope is disclosed in U.S. patent No. 5,016,072. A rigid proof mass is supported in an outer element by a flexible linkage system, which in turn is supported in a frame by another flexible linkage system. This permits the mass to vibrate along two axes relative to the frame. The mass is driven to vibrate along one axis, and the vibration along the second axis caused by the Coriolis force is picked up. Depending on the flexible linkages, the device can be used for detecting in-plane or out-of-plane angular movements. However, fabrication of such a device is complicated due to its complexity, and often means are needed for compensating stress and tension in such a system.

In US patent 6,122,961 a micromachined gyroscope is described. Two coplanar, rigid bodies are suspended over a substrate. The first body is dithered along a dither axis and is movable relative to the second body along the dither axis, but connected with the second body in such a way that it cannot move relative to the second body along a transverse axis perpendicular to the dither axis. The second body can only move along the transverse axis. When the device is subjected to an angular movement, joint transverse oscillations of the two bodies are induced by Coriolis forces, indicating the angular movement. Such a device is relatively complicated and is thus susceptible to manufacturing problems, especially due to the large number of flexures needed to suspend the bodies. In addition, such a device is statically indeterminate, which makes it more sensitive to temperature changes and internal and external stresses.

<u>Brief summary of the invention</u>

It is thus an object of the present invention to provide a gyroscope which is simple in its design and which can sense out-of-plane angular movements. This object is achieved by a gyroscope comprising at least one anchor, a first elongated elastic member, and a second elongated elastic member. The first elongated elastic member has a long axis defining a first direction and has two ends, each end being connected to an anchor. This member is capable of flexural vibration along an actuation direction perpendicular to the first direction. The second elongated elastic member has a long axis defining a second direction. This second direction is parallel to the actuation direction, and the second elongated elastic member is capable of flexural vibration along a sensing direction parallel to the first direction. This implies that at least one end of the second elongated elastic member is free to vibrate in the sensing direction. By making use of flexural vibrations instead of rigid-body motion, a very simple and easily manufactured structure results. Since no large moving masses are involved, the gyroscope is also robust.

The term "anchor" is to be understood as an object which is essentially fixed in space and does not exhibit significant vibration when the elongated elastic members are vibrated. The anchor can be rigidly connected to a substrate or be part of a substrate, but may as well be an object with sufficient mass to be essentially uninfluenced by the vibrations of the elongated members which itself is connected to another object by flexures or other elastic connections. Each end of the first elongated elastic member may be connected to a different anchor, or, preferably, both ends may be connected to the same anchor.

The term "parallel" is to be understood to include the situations that two axes coincide or that an axis is in a plane.

The term "actuation direction" is merely used to define the direction in which the first elongated elastic member is capable to vibrate. In operation, the first elongated elastic member will be actuated in this direction, and flexural vibration of the first elongated elastic member occurs as a result of such actuation.

Likewise, the term "sensing direction" is merely used to define the direction in which the second elongated elastic member is capable to vibrate. In operation, the second elongated elastic member will vibrate in this direction when angular movement is present, which vibration can then be detected (sensed).

Preferably the gyroscope is a micromechanical gyroscope. It is preferred that the second elongated elastic member is connected to the first elongated elastic member at the center of the first elongated elastic member.

In an advantageous embodiment, the second elongated elastic member is connected to the first elongated elastic member at one end of the second elongated member. In this way, it will act like a cantilever. It can, however, also be advantageous to connect the second elongated elastic member to the first elongated elastic member at the center of the second elongated elastic member, thereby avoiding torques on the first elongated elastic member.

The first and second elongated elastic members can be fabricated from a single piece of material, making construction easy.

In general, the unit comprised by the first elongated elastic member and the second elongated elastic member has a first eigenmode consisting essentially of a flexural vibration of the first elongated elastic member together with a rigid-body movement of the second elongated elastic member in the actuation direction. This eigenmode has a first eigenfrequency. In addition, there is a second eigenmode consisting essentially of a vibration of the second elongated elastic member in the sensing direction with a second eigenfrequency. A significant gain in sensitivity results if the first and second eigenfrequencies closely match.

A particularly stable structure results if the anchor comprises a planar one-piece frame defining a plane, and if said plane is approximately parallel to the first direction and to the second direction.

The sensitive parts of the gyroscope can be protected from stress, strain, and shocks if the gyroscope further comprises a support and a plurality of elastic connections. The frame can then be connected to the support by the elastic connections.

The gyroscope is preferably fabricated using a silicon wafer, in particular a low-ohmic monocrystalline silicon-on-insulator wafer defining a wafer plane. Then the first direction and the second direction will be parallel to the wafer plane.

This offers the possibility that the first direction or the second direction is parallel to the (1 0 0) or (1 1 0) crystal direction, thereby minimizing losses and increasing accuracy.

Advantageously, the gyroscope additionally comprises a substrate and a cover arranged above the substrate. The cover will be connected to the substrate in such a way that the substrate and the cover form an airtight chamber encapsulating the first and second elongated elastic members. This chamber can be evacuated to minimize frictional losses due to the presence of air.

For operating the gyroscope, it will comprise means for exciting flexural vibrations of the first elongated elastic member along the actuation direction, means for detecting flexural vibrations of the first elongated member along the actuation direction; and means for detecting flexural vibrations of the second elongated elastic member along the sensing direction.

In one implementation the means for exciting and/or detecting flexural vibrations of the first elongated elastic member and/or the means for detecting flexural vibrations of the second elongated elastic member comprises a comb drive.

Alternatively, the means for detecting flexural vibrations of the first or second elongated elastic member may comprise two or more electrodes arranged above the plane defined by the first and second direction. Other means are also conceivable.

In addition, a method for determining an angular motion with such a gyroscope is provided. The method comprises the steps of exciting the first elongated member to perform flexural vibrations along the actuation direction and detecting flexural vibrations of the second elongated member along the sensing direction.

In a gated way of operation, the step of exciting the first elongated elastic member and the step of detecting flexural vibrations of the second elongated elastic member can be performed consecutively and repeatedly.

Instead, in a continuous way of operation, the step of exciting the first elongated elastic member and the step of detecting flexural vibrations of the second elongated elastic member can be performed simultaneously.

It is a further object of the present invention to provide a gyroscope for sensing in-plane angular movements which is simple in design. This object is achieved by a gyroscope comprising an anchor, an elongated elastic member, means for exciting flexural vibrations of the elastic member along an actuation direction, and means for detecting flexural vibrations of the elastic member along a sensing direction. The elongated elastic member has a long axis defining a first direction and two ends. One end is connected to the anchor. The elongated elastic member is capable of flexural vibration along the actuation direction and along the sensing direction. The actuation direction, the sensing direction and the first direction are mutually orthogonal. Again, by making use of flexural vibrations instead of rigid-body motion, a very simple and easily manufactured structure results. Since no large moving masses are involved, the gyroscope is also robust. Advantageously, the gyroscope is a micromechanical gyroscope.

Also this gyroscope is preferably fabricated using a silicon wafer, in particular a low-ohmic monocrystalline silicon-on-insulator wafer. The wafer defines a wafer plane, and the first direction and the actuation direction will then be parallel to the wafer plane.

The means for exciting flexural vibrations along the actuation direction and/or the means for detecting flexural vibrations along the sensing direction can comprise at least one pair of comb drives arranged symmetrically around the elongated member. This offers the advantage that actuation is accurate and that the in-plane motions of the member may be determined separately from out-of-plane motions.

Preferably, the gyroscope comprises a substrate and a cover arranged above the substrate and connected to the substrate to form an airtight chamber encapsulating the elongated elastic member.

In addition, a method for determining angular motion with such a gyroscope is provided, comprising the steps of exciting the elongated member to perform flexural vibrations along the actuation direction and detecting flexural vibrations of the elongated member along the sensing direction. Again, this method can be used in conjunction with a gated or a continuous way of operation.

Specifically if the detection is done with comb drives, a method is provided comprising the steps of exciting the elongated member to perform flexural vibrations along the actuation direction, detecting capacitance changes in at least one pair of comb drives, and determining the capacitance changes caused by flexural vibrations of the elongated elastic member along the sensing direction by comparing the capacitance changes in each of the pair of comb drives.

It is a further object of the present invention to provide a simple and robust device for determining all three components of the angular velocity vector and/or all three components of the angular acceleration vector. This object is achieved by a device which is fabricated using a single silicon-on-insulator wafer defining a wafer plane, which comprises a first, a second and a third gyroscope arranged on said wafer, wherein each of the first and the second gyroscopes is capable of determining a different component of the angular velocity vector parallel to the wafer plane, and wherein the third gyroscope is capable of determining a component of the angular velocity vector perpendicular to the wafer plane. By using a single silicon-on-insulator wafer for fabricating all three gyroscopes on the same wafer, problems in relative orientation and positioning of the gyroscopes are avoided.

Advantageously, in such a device each of the first and second gyroscopes is a gyroscope according to claim 14, the third gyroscope is a gyroscope according to claim 7, and the first and second gyroscopes are arranged such that the actuation directions of the first and second gyroscopes are perpendicular.

It is a further object of the present invention to provide a method for determining all three components of the angular velocity vector and all three components of the angular acceleration vector. This object is achieved by a method in which a first, a second, and a third gyroscope is employed. Each gyroscope comprises a structure capable of vibrating with a periodically time-dependent velocity in an actuation direction. Each gyroscope further comprises a means for determining an acceleration of said structure in a sensing direction perpendicular to the actuation direction. The method comprises the following steps:

- for each gyroscope, determining the maximum, the frequency and the phase of the time-dependent velocity in the actuation direction;
- for each gyroscope, determining the periodic component of the acceleration in the sensing direction that is in-phase with the velocity in the actuation direction;
- for each gyroscope, determining the periodic component of the acceleration in the sensing direction that is out-of-phase by 90 degrees relative to the velocity in the actuation direction;
- for each gyroscope, determining the component of the angular velocity in a direction orthogonal to both the actuation and the sensing direction from the periodic component of the acceleration in the sensing direction that is in-phase with the velocity in the actuation direction and from the maximum of the velocity in the actuation direction;
- for each gyroscope, determining the component of the angular acceleration in a direction orthogonal to both the actuation and the sensing direction from the periodic component of the acceleration in the sensing direction that is out-of-phase by 90 degrees relative to the velocity in the actuation direction, from the maximum of the velocity in the actuation direction, from the frequency of the velocity in the actuation direction, and from the components of the angular velocity determined from the other two gyroscopes.

Herein, the gyroscopes are arranged in such a way that each gyroscope determines a different component of the angular velocity vector and angular acceleration vector; these components need not be mutually orthogonal, but must be not all in the same plane. Prior art methods have neglected the presence of the angular acceleration; taking the angular acceleration into account yields additional information and higher precision.

Preferably the gyroscopes are arranged such that the component of the angular velocity determined by each gyroscope is orthogonal to the components determined by the other two gyroscopes. If the components are not mutually orthogonal, the vector components in the usual mathematical orthogonal basis system can easily be determined by a basis transformation.

Advantageously, the first and second gyroscopes are gyroscopes according to claim 14, and the third gyroscopes is a gyroscope according to claim 7.

Brief description of the drawings

The invention will become better understood with reference to the following description and the drawings, in which:

Fig. 1       is a schematic plan view of a gyroscope for determining an in-plane component of the angular velocity;

Fig. 2       is a schematic plan view of another embodiment of a gyroscope for determining an in-plane component of the angular velocity;

Fig. 3       is a schematic plan view of yet another embodiment of a gyroscope for determining an in-plane component of the angular velocity;

Fig. 4       is a schematic plan view of a gyroscope for determining the out-of-plane component of the angular velocity;

Fig. 5       is a schematic plan view of an embodiment of a gyroscope for determining the out-of-plane component of the angular velocity;

Fig. 6       is a schematic plan view of another embodiment of a gyroscope for determining the out-of-plane component of the angular velocity;

Fig. 7       is a schematic plan view of yet another embodiment of a gyroscope for determining the out-of-plane component of the angular velocity;

Fig. 8       is a schematic plan view of an advantageous arrangement of gyroscopes for determining an in-plane component of the angular velocity;

Fig. 9       is a schematic plan view of another advantageous arrangement of gyroscopes for determining an in-plane component of the angular velocity;

Fig. 10      is a schematic plan view of an advantageous arrangement of gyroscopes for determining the out-of-plane component of the angular velocity;

Fig. 11      is a schematic plan view of a device for determining the angular velocity vector and the angular acceleration vector;

Fig. 12      is an illustration of the relative movement of the teeth in a comb drive.

Detailed description of preferred embodiments of the invention

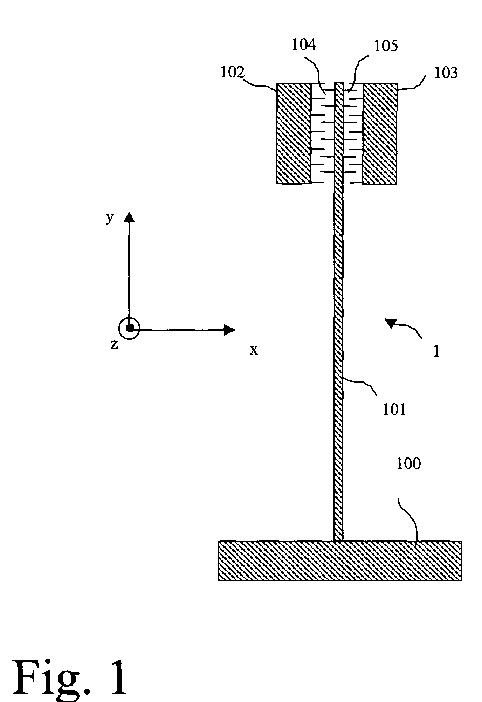

Taking reference to Fig. 1, a gyroscope 1 for measuring a component of the angular velocity in the drawing plane is shown schematically. The gyroscope is essentially planar, with its main extension in the directions indicated by x and y (i.e., in the drawing plane), and comprises an anchor 100 to which an elongated elastic member 101 is connected at one end like a cantilever. The long axis of the member 101 defines a direction y. The material and dimensions of the member 101 are chosen such that the member 101 is free to elastically bend in all directions, i.e., flexural vibration of the member 101 is possible in both the direction indicated by x (in the drawing plane) and the direction indicated by z (out of the drawing plane). Near its free end, the member 101 is arranged between two comb drive anchors 102 and 103. A comb drive 104 is provided between the anchor 102 and the member 101, and another comb drive 105 between the anchor 103 and the member 101 is provided on the opposite side. Each comb drive comprises conductive fingers or teeth connected alternately to the comb drive anchors 102, 103, respectively, and to the member 101 in a meshing fashion. Comb drives are well known in the art. The conducting fingers are preferably straight and perpendicular to the long axis of the member 101, but can also have other shapes or different dimensions, depending on the desired force profile. The anchors 100, 102, and 103 are connected to electrical circuits not shown in the figure.

By providing an ac actuation voltage (possibly in addition to a dc bias voltage) to the anchors, the member 101 can be actuated to perform forced flexural (bending) vibrations along the direction indicated by x, referred to as the actuation direction. The ac voltages applied to the anchor 102 and to the anchor 103 relatively to the anchor 100 have the same frequency and are out of phase by 180 degrees, and the frequency is at or close to an eigenfrequency of the horizontal bending mode, i.e., the mode in the x direction. If the gyroscope 1 is subjected to an angular velocity or an angular acceleration, additional flexural vibration will occur in the direction indicated by z (out of the drawing plane), referred to as the sensing direction. This additional flexural vibration will be caused by a Coriolis acceleration when a component of the angular velocity parallel to the long axis of the member 101 is present. Since the two flexural vibrations are generally of the same frequency, but not in phase with each other, the elastic member 101 will, as a result, perform an elliptical elastic bending motion. In order to increase the sensitivity of the gyroscope, the member 101 is designed such that the eigenfrequencies of the bending modes in the x direction and the y direction closely match. It is preferred not to have an exact match (degeneracy), but a difference between the two eigenfrequencies which generally depends on the Q factor and which is on the order of the width of the resonances of the two modes. In practice, the frequency difference amounts to less than 10%, preferably less than 5%.

In the following, two ways of operation of the gyroscope are described.

The first way of operation is referred to as a gated way. The member 101 is actuated for a certain amount of time by the comb drives 104 and 105, and then the actuation is stopped. The member 101 continues to vibrate. After waiting a certain number of vibration cycles, long enough such that electrical transients have decayed sufficiently, the comb drives 104 and 105 are used for sensing the flexural vibration of the elongated member 101 by measuring the capacitance changes in the comb drives 104 and 105 due to the vibration. Ways of measuring capacitance changes are well known in the art. The capacitance change which is due to the vibration along the actuation direction x can be separated from the capacitance change due to the vibration along the sensing direction z as follows: The vibration along the actuation direction x generates periodic capacitance changes in the left comb drive 104 and the right comb drive 105, respectively, which are shifted in phase by 180 degrees with respect to each other. On the other hand, the vibration along the sensing direction z generates periodic capacitance changes which have the same phase in both comb drives. By comparing the signals from the left comb drive 104 and the right comb drive 105, the contributions from the vibrations along the two different directions can thus be separated. More details, including calculations, are given further below. After the measurement has been completed, actuation is started again, and the process is repeated in a consecutive fashion. The advantages of such a way of operation are that only one means is needed for both actuation and detection, thus less components are needed. Having less components means that less can go wrong. Finally, cross-talk between the actuation means and the detection means is avoided if only one such means is necessary. The main disadvantage is that the gyroscope does not measure continuously.

The second way of operation is a continuous way. For initial calibration, the member 101 is actuated by the comb drives 104 and 105 without being subjected to angular motion. During actuation, the capacitance changes in the comb drives 104, 105 are recorded. Then the gyroscope 1 is subjected to angular motion, and the resulting capacitance changes in the comb drives are determined. The capacitance changes recorded without angular motion are then subtracted from the changes with angular motion to yield the contribution of the Coriolis acceleration only. While this way enables continuous measurements, it is more complicated in operation.

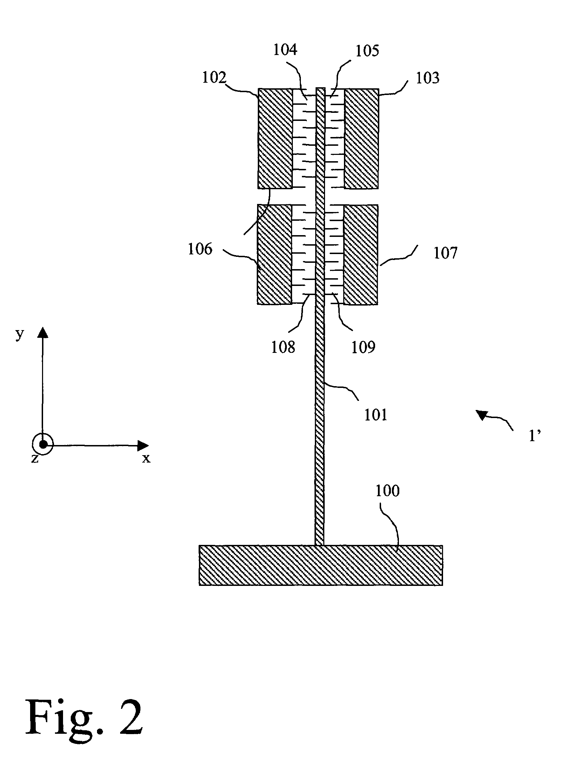

Taking reference to Fig. 2, an embodiment of the gyroscope with two pairs of comb drives is shown schematically. The gyroscope 1' is similar to the gyroscope 1 in Fig. 1, except that an additional pair of comb drives 108, 109 with comb drive anchors 106, 107 is present. All other parts are the same as the corresponding parts in Fig. 1 and carry the same reference numbers. While in Fig. 1, the single pair of comb drives 104, 105 served for both actuating the member 101 and sensing the vibration of this member, with the design of Fig. 2 the actuation can be performed with one pair of comb drives, e.g., comb drives 104 and 105, and the sensing can be performed with the other pair, e. g., comb drives 108 and 109. The same ways of operation as in Fig. 1 are possible. For the continuous way, the presence of a second pair of comb drives offers the advantage that the capacitance changes of the pair of comb drives used for sensing the vibration are easier to measure because no actuation voltage is applied to this pair during measurement. Operation in continuous way is thus simpler.

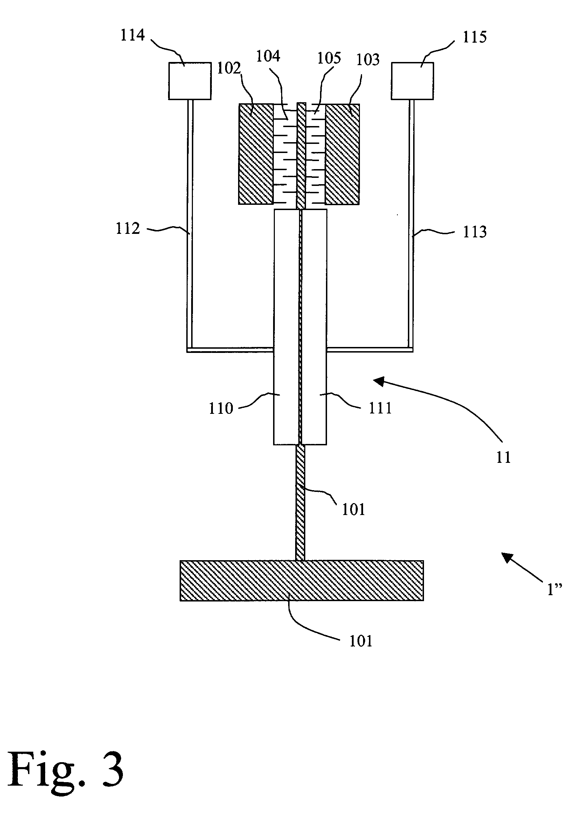

Referring now to Fig. 3, yet another embodiment of the present invention is schematically shown. Fig. 3 shows a gyroscope 1" which contains the same parts as the gyroscope 1 in Fig. 1. Again, the same parts carry the same reference numbers as in Fig. 1. In addition, an electrode arrangement 11 is present. This arrangement comprises two flat electrodes 110, 111 extending in a plane above the elongated elastic member 101, thus "overhanging" the member 101. The electrodes 110, 111 have a gap between them. Each electrode is connected to a conducting line 112, 113, respectively, which is in turn connected to a contact member 114, 115, respectively. The electrodes can advantageously be integrated in a cover which extends above the gyroscope (above the drawing plane).

The advantage of overhanging plates is in the fact that while member 101 vibrates, the gas flow between it and the overhanging electrodes leads to smaller damping of the vibration than if the electrodes would be arranged at the sides of the member 101, since the vibration amplitude parallel to the sensing axis is much smaller than vibration amplitude parallel to the actuation axis. Electrodes 110, 111, lines 112, 113, and contact members 114, 115 are made of conductive material, preferably metal layers plating a glass cover from its inside. Electrodes 110, 111, and lines 112, 113 are then located in a cavity in the cover above the moving parts of the unit, and contact members 114, 115 may touch a substrate which the gyroscope is mounted on, making the electrical connection with it.

The gyroscope 1" can again be operated either in a gated way or in a continuous way. In either way, the pair of comb drives 104, 105 is used for actuating, and the electrode arrangement 11 is used for detecting, either alone or in conjunction with the comb drives. Detection of the vibration by the electrode arrangement 11 is done by measuring the changes of capacitance in the left capacitor formed by the left electrode 110 and the member 101 on the one hand, and the right capacitor formed by the right electrode 111 and the member 101 on the other hand. A vibration of the member 101 in the actuation direction will cause periodic capacitance changes in the left and right capacitors which have opposite phase, while a vibration in the sensing direction will cause periodic capacitance changes with identical phase. By taking this into account, again contributions from the two vibration directions can be separated.

These gyroscopes are preferably fabricated using a low-ohmic, microelectronics-grade silicon-on-insulator (SOI) wafer by micromachining processes. This enables one to realize all structures from monocrystalline silicon, which has negligible fatigue sensitivity (if any), highly predictable elastic and thermo-elastic properties, and is ideally brittle up to a few hundred degrees centigrade, meaning no plasticity effects can occur during handling or during the normal operating life of the gyroscope. The thermal expansion coefficient of silicon is low (about 2.6 ppm/K), making the gyroscope less susceptible to temperature changes. The low-ohmic property of the wafer ensures that all structures are conductive, thus saving the need to use additional conducting layers such as metals, which would make the process more expensive, and would worsen the mechanical properties of the gyroscope. The use of an SOI wafer combined with bulk micromachining processes also enables producing capacitors with large areas as compared to surface micromachining processes.

The simple structure of the gyroscopes 1, 1', 1" has numerous advantages. Being essentially statically determinate, they are inherently less sensitive to some sources of internal stress. They are also highly resilient to some external sources of stresses such as wafer bending or compression, packaging mismatch effects, etc. They can furthermore be easily produced by micromachining processes.

Preferably, the gyroscopes 1, 1', 1" are covered. The cover touches the surrounding static substrate (in the case of an SOI wafer, the wafer) so as to form a chamber and comprise a full sealing around the gyroscope's elements. The cover preferably has a cavity above any element of the gyroscope which is designed to move, and it is preferably made of glass. The glass cover can be anodically bonded to the substrate wafer. The cover has a few roles: First, to provide an envelope protecting the inner side of the units from contaminations and from mechanical damage. Second, in order to increase the gyroscope's performance and reduce damping effects, the chamber is preferably evacuated. Third, in the case of the gyroscope 1", comprising an electrode arrangement 11, the electrodes may be implemented by plating a part of the cover with conductive layers.

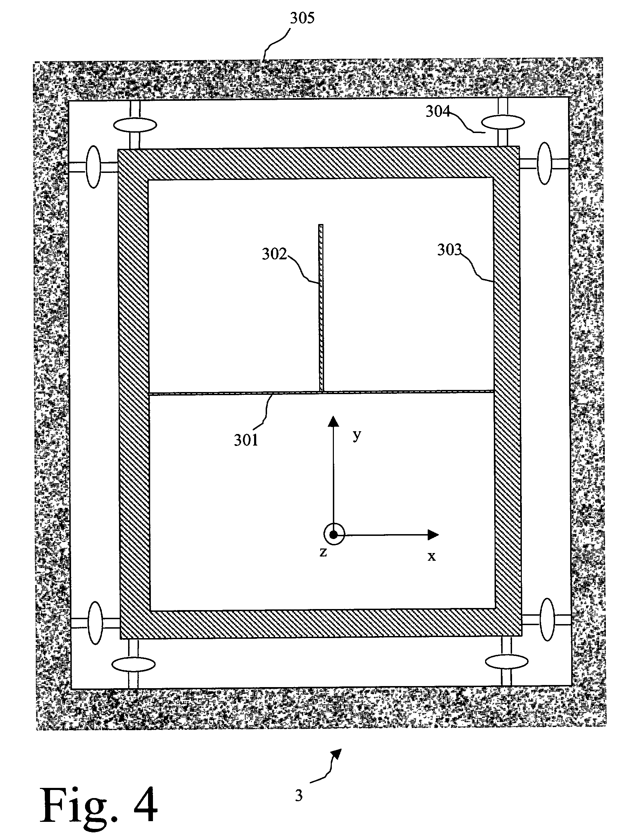

Taking now reference to Fig. 4, a gyroscope 3 for measuring a component of the angular velocity perpendicular to the drawing plane is shown schematically. The gyroscope is again essentially planar, with its main extension in the directions indicated by x and y (i.e., in the drawing plane). For clarity, the means for actuating the vibrations and for sensing the vibrations are not shown in the figure. The key components are a first elongated elastic member 301, here in the form of a thin transverse beam, and a second elongated elastic member 302, here in the form of a cantilever beam connected to member 301 at one end. Several other shapes of these members different from the ones shown are possible, and the connection of the second member to the first member need not be connected to the first member at the second member's end. For example, it may be advantageous to connect the second member 302 to the first member 301 at the center of the second member 302, reducing torques on the first member due to the weight of the second member 302. The long axis of the first member 301 defines a first direction designated by x, and the long axis of the second member 302 is perpendicular to this direction and defines a second direction y. At its two ends, the first member 301 is connected to an anchor 303 in the form of a rectangular frame. The second member 302 is connected to the first member 301 at the first member's center. The first member 301 is designed such that it can perform elastic bending vibrations (flexural vibrations) in a direction called the actuation direction, which coincides with the second direction y. While the ends of this member 301 are fixed at the anchors, the portions away from its ends participate in the vibration. In the lowest eigenmode, the vibration shows nodes at the end points and an amplitude maximum at the center of the member 301. On the other hand, the first member 301 is stiff enough to support the weight of the second member 302, which acts like an elastic cantilever. The second member is designed such that it can perform elastic bending vibrations (flexural vibrations) in a direction called the sensing direction, which here coincides with the first direction x. These design goals can be achieved by fabricating the members 301 and 302 to have an extension perpendicular to the device plane (i.e., in the z direction) which is several times larger (preferably at least 3 times larger, e.g., 5 times larger) than the extension of the member 301 in the actuation direction y and of the member 302 in the sensing direction x. A large variety of shapes is possible for the members 301, 302 as long as they fulfill their purpose as described. Preferably, both members 301 and 302 are fabricated from a single piece of material. When the first member 301 vibrates freely along the actuation direction y, it takes the second member 302 along by the rigid connection between them. Since the long axis of the second member 302 is parallel to the actuation direction y, the second member is not excited to vibrate in any other direction, but follows the vibration of the first member 301 as a rigid body. Therefore, the unit comprised of the first elongated member 301 and the second elongated member 302 has a common vibrational eigenmode (referred to as the "first eigenmode" in the following) essentially in the actuation direction, with a first eigenfrequency.

The gyroscope 3 is operated to determine an angular velocity component perpendicular to the major plane of the device (i.e., along the direction indicated as z) in the following way: The first elastic member 301 is actuated by suitable means to perform a flexural vibration in the actuation direction together with the second member 302 attached to it. It is preferable that the actuation frequency matches an eigenfrequency of the first eigenmode. If a component of the angular velocity vector or an angular acceleration perpendicular to the major plane of the device (i.e., along z) is present, an acceleration (for the case of angular velocity, a Coriolis acceleration) in the sensing direction occurs, inducing a flexural vibration of the second elastic member 302 in the sensing direction x, which can be detected by suitable means. If this vibration is free (not forced), it can be viewed as a second eigenmode of the unit comprised of the first elongated member 301 and the second elongated member 302. A significant gain in amplitude of the induced vibration will result if eigenfrequency of this second eigenmode matches an eigenfrequency of the first eigenmode.

Again, gyroscope 3 is preferably fabricated using a low-ohmic, microelectronic-grade silicon-on-insulator (SOI) wafer by micromachining processes.

In the embodiment of Fig. 4, the sensitive key components, i.e., the elastic members 301 and 302, are anchored in an anchor 303 in the form of a rigid frame, which is further suspended from a support 305 by elastic connections (flexures) 304, e.g., springlike elements. The anchor 303 need not have this form in general, and it need not be suspended. However, since element 301 is essentially a statically non-determinate body, it may be susceptible to external stresses and strains and (in the case the gyroscope is machined from a wafer) to wafer-internal sources of stresses and strains such as packaging, wafer bending etc. Suspending the designed rigid frame anchor 303 from a support 305 will diminish much of these sources due to its design. The flexures 304 are preferably attached to the rigid frame anchor 303 in its corners, ensuring that external strains or stresses would pass through the frame to the other side, hardly affecting member 301. The flexures are designed to be compliant in-plane, but stiff out-of-plane. While such a suspension is advantageous, it is not critical for the principle of the gyroscope.

The gyroscopes 1, 1', 1" measuring in-plane motion can also be surrounded by a similar frame and suspended from a support, although they are less susceptible to external mechanical or thermo-mechanical influences.

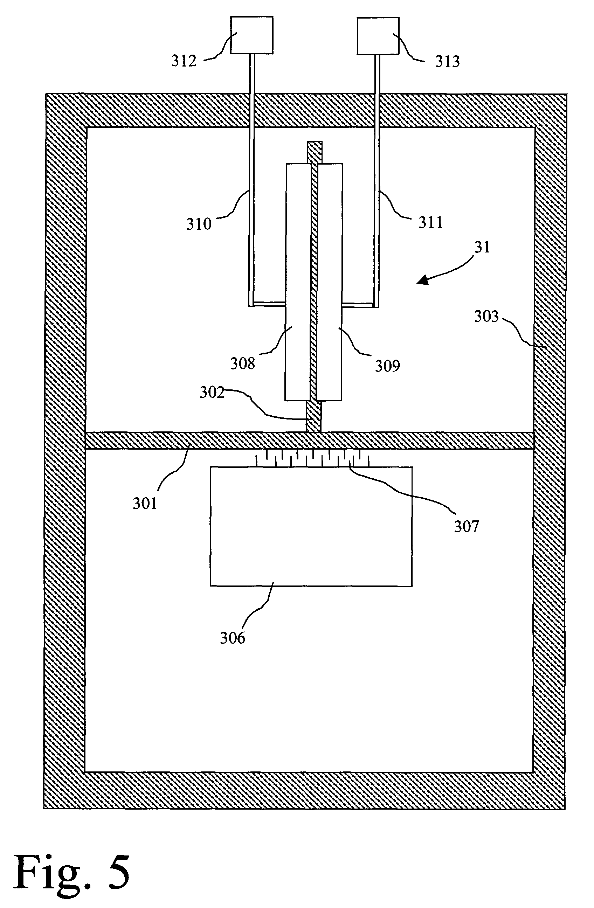

Examples for means for actuating and detecting vibrations, which were not shown in Fig. 4 for clarity, are now described with reference to Figs. 5 to 7. Referring to Fig. 5, the central portion of the gyroscope 3, comprising the frame anchor 303, the first elongated elastic member 301, and the second elongated elastic member 302, are shown together with actuation means and detection means. The actuation means is a comb drive 307 with fingers alternately connected to the first elongated member 301 and to a comb drive anchor 307. By applying an ac voltage (possibly with an additional dc bias voltage) between the first elongated member 301 and the comb drive anchor 306, the first elongated member 301 is forced to perform flexural vibrations along the actuation direction.

The vibration of the second elongated member 302 is monitored by an electrode arrangement 31 comprised of electrodes 308, 309, lines 310, 311, and contact members 312, 313, similar to the electrode arrangement 11 described in connection with Fig. 3.

Reference is made to that description. The electrodes 308, 309 extend above a portion of the second elongated member 302, but they are shorter than this member and do not cover its ends. In this way only the capacitance change due to the flexural vibration of member 302 is measured, while the movement of member 302 along with member 301 in the actuation direction does not lead to significant capacitance changes.

Again, several ways of operation are possible, including gated operation and continuous operation. In a gated way, the gyroscope is actuated by the comb drive 307 for a certain number of vibration periods. Then the actuation is stopped, and after a predetermined number of cycles the capacitance changes in the electrode arrangement are monitored, as described above in connection with Fig. 3.

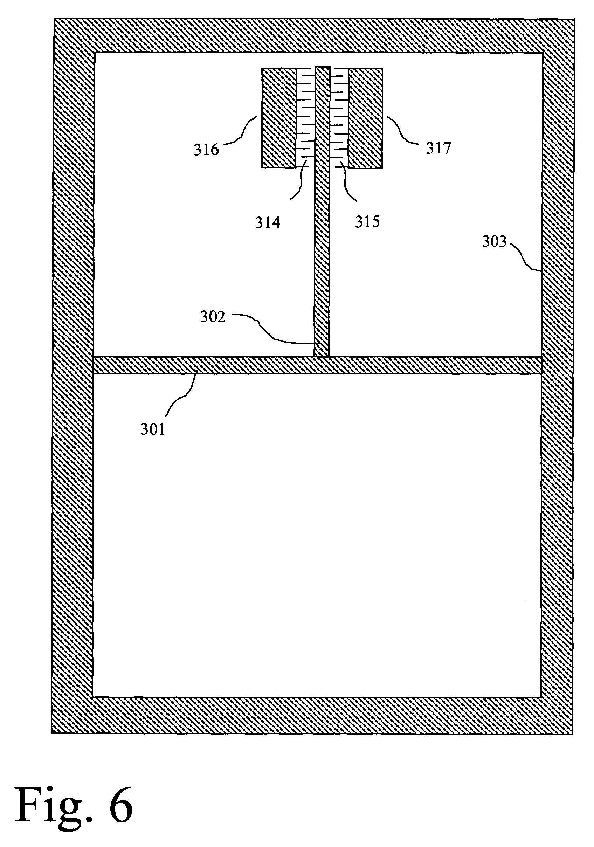

Fig. 6 again shows the central portion of the gyroscope 3. The actuation means are not shown in the figure for clarity. For detection, two comb drives 314, 315 are provided between comb drive anchors 316, 317. These comb drives serve as detection means as described above in conjunction with Fig. 1 and 2, and reference is made to that description.

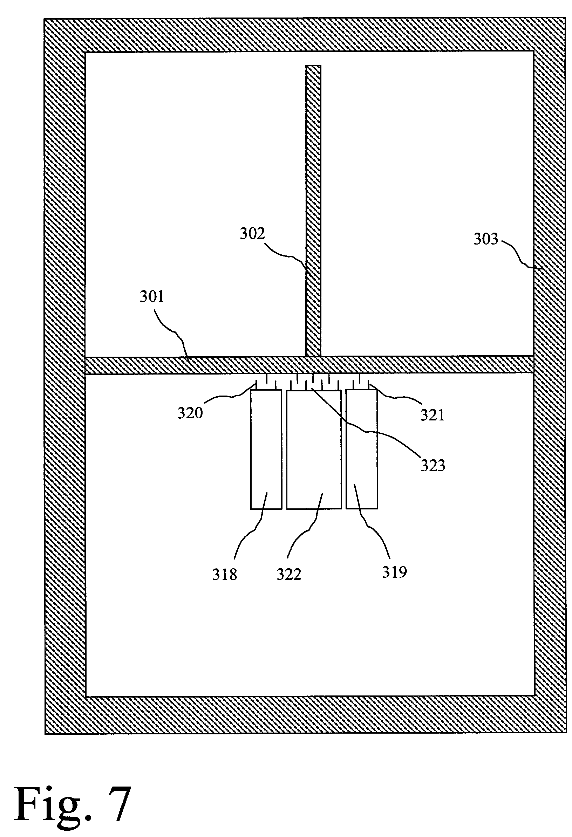

In addition to means for detecting the vibration of the second elongated member 302, means can be provided for detecting the vibration of the first elongated member 301 independently of the actuation. Referring to Fig. 7, three comb drives 320, 321, 323 are provided between the member 301 and comb drive anchors 318, 319, and 322. The means for detecting the vibration of the second member 302 are not shown in the figure for clarity. The central comb drive 323 is used to actuate the gyroscope, while the other two comb drives are used to monitor the vibration in the actuation direction. Instead of comb drives, a capacitive system similar to system 31 in Fig. 5 can be used for detection.

A plurality of gyroscopes can be fabricated from the same wafer. Specifically, it is advantageous to combine a first gyroscope for measuring the out-of-plane component of the angular velocity vector with at least a second and a third gyroscope for measuring different in-plane components. For this, the second and third gyroscopes must be oriented differently, preferably orthogonally. Arranging the gyroscopes on the same wafer avoids problems of orienting gyroscopes relative to each other which have been produced independently. Furthermore, a huge advantage of having a single wafer is in the fact that the gyroscopes can be oriented exactly along predetermined crystal axes of the single-crystalline silicon. Orientation of the gyroscopes along the crystal axes, preferably the (1 0 0) or (1 1 0) axes, can be done by methods well known in the art.

In order to diminish the unwanted effects of manufacturing tolerances, packaging strains and stresses, anisotropy and non-homogeneity effects of manufacturing and other sources making the units different from each other, and in order to enhance the outgoing signal, a plurality of gyroscopes may be combined together. Noting that silicon is a weak orthotropic material, the (1 0 0) and (1 1 0) crystal directions are principal directions of the crystal. Thus, gyroscopes can be advantageously arranged in a plane at 45 degree angles to each other. Specifically, manufacturing gyroscopes with the long axis of one of their elongated elastic member parallel to the (1 1 0) direction may exploit the very low Poisson ratio in this direction, diminishing problems such as self-heating of the gyroscope during operation.

Normal coordinate axes transformations, which are well known in the art, can be used to compare signals from gyroscopes rotated with respect to each other.

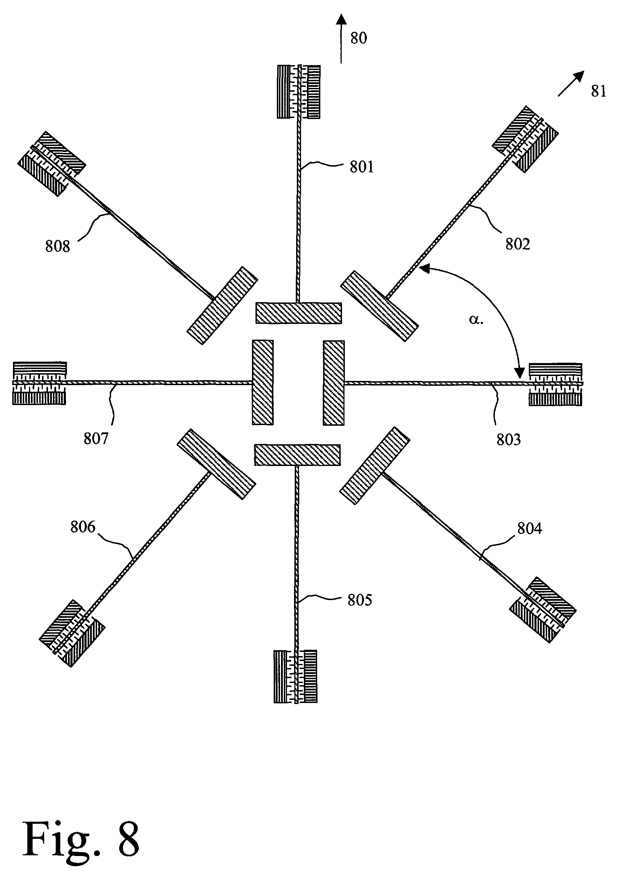

One such arrangement is shown in Fig. 8. Direction 80 is the (1 0 0) direction, direction 81 the (1 1 0) direction. The angle $\alpha$ therefore is 45 degrees. Eight gyroscopes 801, 802, 803, 804, 805, 806, 807, and 808 are arranged in a plane, rotated with respect to each other in 45 degree steps. The gyroscopes can be arranged to be actuated together, and the signal would be measured from all rotated units at once. The signal can be combined after filtering or before filtering. Another way of improving the signal is by averaging not only over rotated units, but also over units with similar orientations.

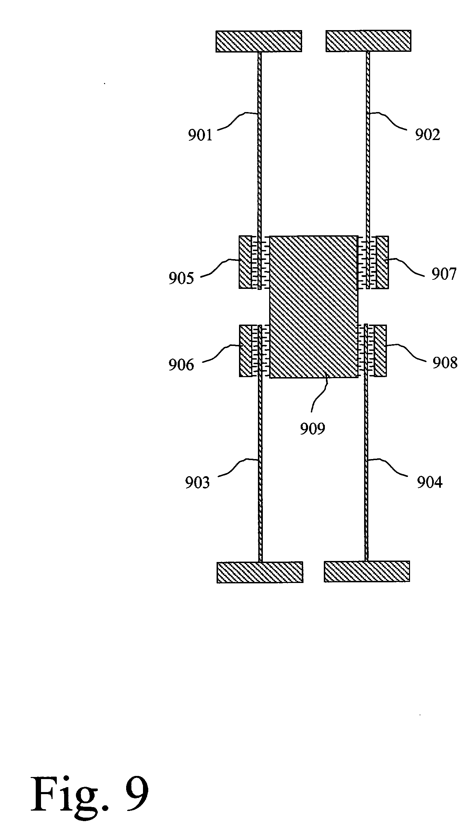

Another possible arrangement is shown in Fig. 9. Four gyroscopes with their elongated members 901, 902, 903, 904 arranged in parallel or antiparallel are combined. Four comb drives of these gyroscopes share a common anchor 909, while the comb drives on the opposite side have individual anchors 905, 906, 907, 908.

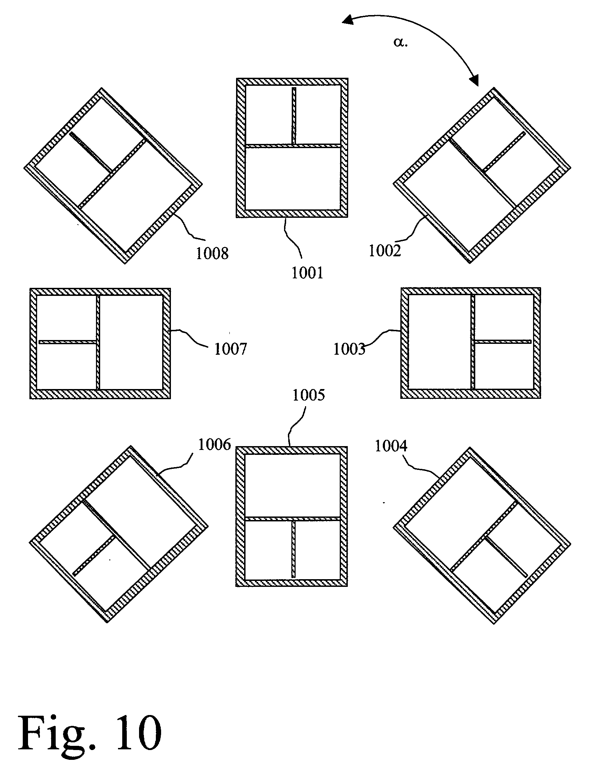

Fig. 10 shows an advantageous arrangement of eight gyroscopes 1001, 1002, 1003, 1004, 1005, 1006, 1007, 1008 for measuring out-of-plane angular movements. They are arranged in a plane such that the long axis of one of their elongated members is either in the (1 0 0) direction 1010 or in the (1 1 0) direction 1011. Again, the gyroscopes are therefore arranged in steps of 45 degrees with respect to each other.

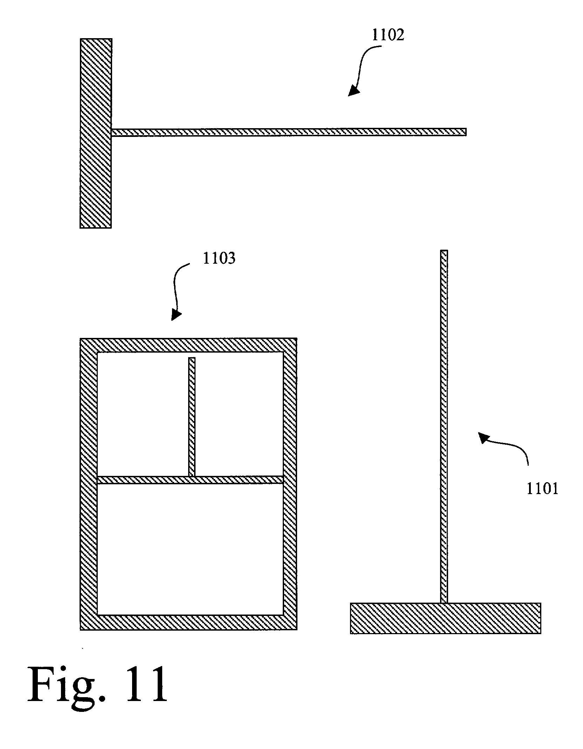

Fig. 11 shows a device for measuring three components of the angular velocity and/or angular acceleration. A first gyroscope 1101, a second gyroscope 1102, and a third gyroscope 1103 are arranged on a single wafer. For simplicity, the means for actuating vibrations and detecting vibrations are not shown, but are understood to be also present, as apparent, e.g., from Figs. 1 to 7. The gyroscopes are oriented such that one long axis of an elongated member is always either in the (1 0 0) direction or the (1 1 0) direction of the silicon crystal lattice. The first and second gyroscopes 1101, 1102 are gyroscopes capable of determining an in-plane component of the angular velocity, and advantageously can be gyroscopes of the kind shown in Figs. 1 to 3. The third gyroscope is a gyroscope capable of determining an out-of-plane component of the angular velocity, and advantageously is a gyroscope of the kind shown in Figs. 4 to 7. Arranging the gyroscopes on a single wafer offers the possibility of finding an exact alignment relative to each other, a minimal need of space, and maximum reliability and precision. Furthermore, arranging three gyroscopes together enables one to determine not only the complete angular velocity vector, but also the angular acceleration vector.

In the foregoing examples, comb drives were used for actuation and comb drives or planar electrode arrangements were used for detection. Of course, other ways of actuation and detection are possible, such as piezoelectric and piezoresistive means or optical detection.

In all devices discussed above, the electronics for operating the gyroscopes has not been discussed. Such electronics is, however, well known in the art.

In the following, it will be described in detail how the acceleration due to angular movement can be determined quantitatively from measuring the capacitance changes of a comb drive.

In this section, we shall develop the expressions which enable finding an angular velocity component with a gyroscope like the one displayed in Fig. 1, driven and actuated by comb drives. The cantilever-like member 101 of this gyroscope is actuated to vibrate in-plane, and the angular velocity causes it to also vibrate out-of-plane. The combined influence of these two sources is superposed and causes the member 101 to perform an elliptical elastic bending motion in space. We shall now show how to extract the capacitance change in the comb drives induced by the out-of-plane component (caused by the angular velocity) from the overall capacitance change due to the overall bending motion. The following results are developed for a single comb-drive cell, comprising one tooth (finger) on the elastic vibrating member 101, and one tooth (finger) on the fixed comb-drive anchor 102 or 103. The overall contribution would be a multiplication of the contribution of one cell by the number of cells the whole comb drive. Since we are dealing with an elastically deflecting body, this calculation will be the more accurate the smaller the ratio of overall comb-length to overall length of the structure is. Since the teeth are moving parallel to each other, the capacitance change is caused by the change in the overlapping area between the two teeth.

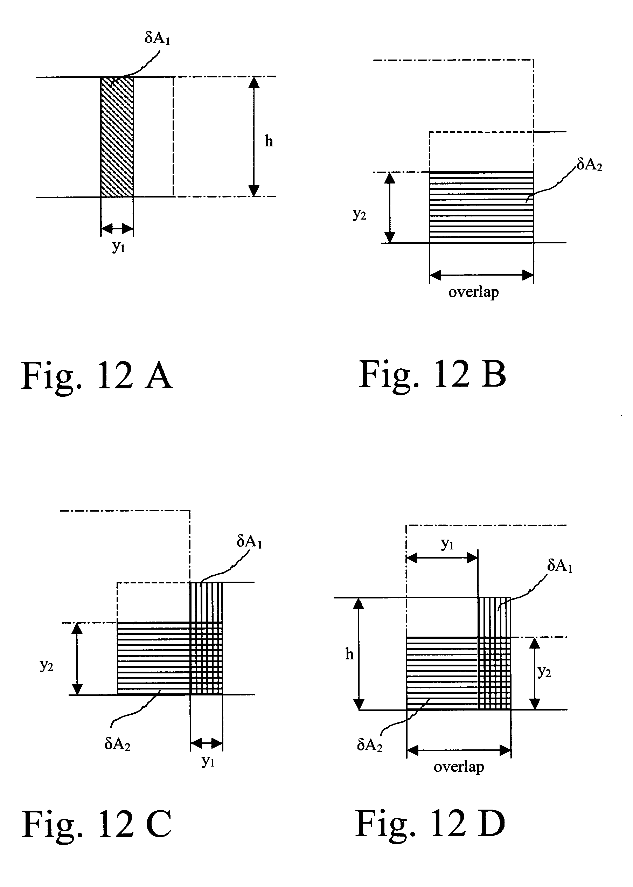

The discussion below refers to Figs. 12 and Fig. 1. In Figure 12 A, the static comb-drive finger is drawn with a full line style, and the moving comb-drive finger is drawn with a line-dot-line style. Hidden lines are drawn with a dashed line style. Overlapping area changes are marked by a patterned filling.

In Fig. 12A the area change caused by a motion of member 101 in the right-left-direction only is illustrated. This is the motion due to actuation only, when there is no presence of angular velocity. In Fig. 12B the area change by motion due to the angular velocity is shown, as if there were no actuation.

The cantilever-like member 101 has comb-drives from both its si-sides. Thus, when it is moving left-right, the overlapping area on one side increases, and on the other side it diminishes. When the structure moves up-down, there is a similar effect on the comb drives on both sides of the structure. This is the situation illustrated in figures 12C, and 12D, where Fig. 12C illustrates a combined up-left motion, and Fig. 12D illustrates a combined up-right movement.

In the following, the notation will be introduced:

| | |
|---|---|
| h | - Tooth height. |
| overlap | - Initial overlap of the comb teeth, before any motion occurred. |
| $y_1$ | - Right-left relative motion of the tooth (caused by actuation). |
| $y_2$ | - Up-down relative motion of the tooth (caused by angular velocity) . |
| $\delta A_1$ | - Overlapping area change due to right-left motion. |
| $\delta A_2$ | - Overlapping area change due to up-down motion. |
| $\delta A|_{meas.}^{I}$ | - Measured area change by right comb-drive cell. |
| $\delta A|_{meas.}^{II}$ | - Measured area change by left comb-drive cell. |

Regarding the Figures 12A, 12B we obtain:

$$\delta A_1 = h \cdot y_1 \tag{1.1}$$

$$\delta A_2 = overlap \cdot y_1 \tag{1.2}$$

From Fig. 12D we obtain:

$$\delta A|_{meas.}^{I} = \delta A1 + \delta A_2 - y_1 \cdot y_2 \tag{1.3}$$

Or:

$$\delta A_2 = \delta A|_{meas.}^{I} - \delta A_1 + y_1 \cdot y_2 = \delta A|_{meas.}^{I} + (y_2 - h) \cdot y_1 \tag{1.4}$$

From Fig. 12C we obtain:

$$\delta A|_{meas.}^{II} = overlap \cdot h - overlap \cdot y_2 + y_1 (h - y_2) \tag{1.5}$$

Or:

$$\delta A_2 = \text{overlap} \cdot h + \delta A_1 - y_1 \cdot y_2 - \delta A|_{\text{meas.}}^{\text{II}} \qquad (1.6)$$

Equating $\delta A_2$ obtained from both calculations we obtain:

$$\delta A|_{\text{meas.}}^{\text{I}} - \delta A_1 + y_1 \cdot y_2 = \text{overlap} \cdot h + \delta A_1 - y_1 \cdot y_2 - \delta A|_{\text{meas.}}^{\text{II}} \qquad (1.7)$$

Moving to the left side of the equation the known and measured parameters we obtain:

$$\delta A|_{\text{meas.}}^{\text{I}} + \delta A|_{\text{meas.}}^{\text{II}} - \text{overlap} \cdot h = 2(\delta A_1 - y_1 \cdot y_2) = 2\kappa \qquad (1.8)$$

Using the equation obtained from Fig. 12C we can write:

$$\delta A_2 = \text{overlap} \cdot h + \kappa - \delta A|_{\text{meas.}}^{\text{II}} =$$

$$= \text{overlap} \cdot h + \frac{1}{2}(\delta A|_{\text{meas.}}^{\text{I}} + \delta A|_{\text{meas.}}^{\text{II}} - \text{overlap} \cdot h) - \delta A|_{\text{meas.}}^{\text{II}} =$$

$$= \frac{1}{2}(\text{overlap} \cdot h + \delta A|_{\text{meas.}}^{\text{I}} - \delta A|_{\text{meas.}}^{\text{II}}) = \text{overlap} \cdot y_2 \qquad (1.9)$$

Thus:

$$Y_2 = \frac{(\text{overlap} \cdot h + \delta A|_{\text{meas.}}^{\text{I}} - \delta A|_{\text{meas.}}^{\text{II}})}{2 \cdot \text{overlap}} \qquad (1.10)$$

And:

$$Y_1 = \frac{\delta A_2 - \delta A|_{\text{meas.}}^{\text{I}}}{y_2 - h} = \frac{\text{overlap} \cdot y_2 - \delta A|_{\text{meas.}}^{\text{I}}}{y_2 - h} \qquad (1.11)$$

Thus we have expressed the needed parameters we need for calculating the angular velocity in terms of known parameters and measured parameters. The operations described in expressions (1.10) and (1.11) above and other needed operations as time derivation can readily be done by well-known software or hardware implementations.
These expressions can be used to circumvent time-consuming calibration procedures when comb drives are used, as the expressions provide a direct connection between capacitance change and angular velocity.
In the following, it will be described in detail how the acceleration due angular movement can be determined quantitatively from measuring the capacitance changes of a pair of overhanging electrodes.
In this section we develop the expressions for obtaining the capacitance change measured by a pair of overhanging electrodes (in the following referred to as capacitor plates) over a cantilever-like member, as seen in Fig. 3 and Fig. 5. In the following discussion the cantilever-like member will be modeled by a clamped-free beam.
The notation used in this section is similar to the one used by Meirovitch, "Elements of vibration analysis" (1986). Additional notations are defined below.

A            - Capacitor plate initial overlapping area.
$A_{cs}$        - Beam cross-section area.

$\Delta A|_{max}$  - Amplitude of overlapping area change.
C        - Initial capacitance between capacitor plate and underlying beam.
$\Delta C|_{max}$  - Amplitude of capacitance change between capacitor plate and underlying beam.

The deflection of a clamped-free beam in a natural mode is given by: (Meirovitch, p.227)

$$y(x) = \frac{C^1}{[\sin((\beta L) - \sinh((\beta L)]}[\sin(\beta L) - \sinh(\beta L)) \cdot (\sin(\beta x) - (\sinh(\beta x)) +$$

$$+ (\cos(\beta L) + \cosh(\beta L)) \cdot (\cos(\beta x) - \cosh(\beta x)) \qquad (2.1)$$

Where:

$$\beta = \sqrt[4]{\frac{\omega^2 \rho A_{cs}}{EI}} \qquad (2.2)$$

For a capacitor plate that is exactly overlapping the beam, or for two capacitors plates each overlapping half of the beam, the change in the capacitor's area is given by:

$$\Delta A\big|_{max} = 2\int_0^L y(x)dx = 2\frac{C_1}{\beta} \qquad (2.3)$$

Where $C_1$ is a free constant in a free vibration of the beam, and can be specifically found in a harmonic forced vibration. Where, of course:

$$\frac{\Delta A|_{max}}{A} = \frac{\Delta C|_{max}}{C} \Rightarrow \Delta A\big|_{max} = \Delta C\big|_{max} \frac{C}{A} \qquad (2.4)$$

Thus, $C_1$ is given by:

$$C_1 = \frac{\Delta A\big|_{max} \cdot \beta}{2} = \Delta C\big|_{max} \cdot \left(\frac{C\beta}{2A}\right) \qquad (2.5)$$

Thus, we have expressed $C_1$ as a function of known parameters and measured parameters. Referring again to equation (2.1), we see that knowing $C_1$ means knowing what $y(x)$ is, and this can give us the information we need in order to calculate the angular velocity.
For a different initial overlapping area of the overhanging capacitor plates and the vibrating beam, the above calculation can readily be modified. General analytical expressions would be hard to be obtained, however for every specific geometry, with known dimensions, the method of finding $C_1$ can readily be implemented.
The operations needed in order to find $C_1$ and other necessary operations such as time derivations can readily be implemented by software or hardware means.
In the following, it will be described in detail how three components of the angular velocity vector and three components of the angular acceleration vector can be determined.
First, the notation is introduced.
The notation generally follows the notation in "Principles of dynamics" by Greenwood (1965), page 51, eq. (2-106):

R - Position vector from inertial coordinate system to rotating coordinate system.

ω - Angular velocity.

ρ - Position vector of the point in the rotating coordinate system.

Derivatives by time are denoted, for example:

$$\dot{\omega} = \frac{d\omega}{dt} \quad ; \quad \ddot{\omega} = \frac{d^2\omega}{dt^2} \qquad\qquad (3.1a,b)$$

$\mathbf{e_1}$, $\mathbf{e_2}$, $\mathbf{e_3}$ - Base vectors of the rotating coordinate system. $a_i$ - The subscript (i) refers to the component of the vector **a** in the direction of the base vector $\mathbf{e_i}$.

Vectors are written in bold fonts, for example the angular velocity vector: ω. Components of a vector are not in bold fonts, and are written with an index defining to which base vector they are parallel to. Thus, $\omega_1$ is the component of the vector ω parallel to the base vector $\mathbf{e_1}$.

From "Principles of dynamics" by Greenwood (1965), page 51, eq. (2-106) we obtain the acceleration **a** of a body in a rotating system:

$$\mathbf{a} = \ddot{\mathbf{R}} + \dot{\boldsymbol{\omega}} \times \boldsymbol{\rho} + \boldsymbol{\omega} \times (\boldsymbol{\omega} \times \boldsymbol{\rho}) + (\ddot{\boldsymbol{\rho}})_r + 2\boldsymbol{\omega} \times (\dot{\boldsymbol{\rho}})_r \qquad\qquad (3.2)$$

The subscript (r) means that derivatives of the coefficients of the vector should be taken, and not of the basis vectors.

In the gyroscope's case, one can assume that $\ddot{\mathbf{R}}$ is not periodic with the actuation or sensing frequency of the device, and its influence can be omitted by using high-pass and low-pass filtering.

ρ can be omitted since there is no autonomous independent acceleration in the direction of the measurement. Thus we are left with:

$$a = \dot{\omega} \times \rho + \omega \times (\omega \times \rho) + 2\omega \times (\dot{\rho})_r \qquad\qquad (3.3)$$

Let us now expand the expression for the acceleration a to components in the usual orthogonal basis system for each of the gyroscopes, for the case that the gyroscopes are mutually orthogonal. For one gyroscope measuring an in-plane component, we actuate (vibrate), say, in the $\mathbf{e_1}$ direction, and detect (measure) in the $\mathbf{e_3}$ direction. Thus, for this gyroscope the measured acceleration would be:

$$a_3 = -\dot{\omega}_3\rho_1 + \omega_1\omega_3\rho_1 - 2\omega_2\dot{\rho}_1 = (-\dot{\omega}_3 + \omega_1\omega_3)\rho_1 - 2\omega_2\dot{\rho}_1 \qquad\qquad (3.4)$$

For the second in-plane measuring gyroscope, we actuate (vibrate) in the $\mathbf{e_2}$ direction, and measure in the $\mathbf{e_3}$ direction. Thus, for this gyroscope the measured acceleration would be:

$$a_3 = -\dot{\omega}_1\rho_2 + \omega_2\omega_3\rho_2 + 2\omega_1\dot{\rho}_2 = (-\dot{\omega}_1 + \omega_2\omega_3)\rho_2 + 2\omega_1\dot{\rho}_2 \qquad\qquad (3.5)$$

For the out-of-plane measuring gyroscope, there are two possibilities: The first one is that we actuate (vibrate) on the $\mathbf{e_1}$ direction and measure in the $\mathbf{e_2}$ direction, and the second one is that we actuate (vibrating) in the $\mathbf{e_2}$ direction and measure in the $\mathbf{e_1}$ direction. For the first possibility we obtain:

$$a_2 = \dot{\omega}_3\rho_1 + \omega_1\omega_2\rho_1 + 2\omega_3\dot{\rho}_1 = (\dot{\omega})_3 + (\omega_1\omega_2)\rho_1 + 2\omega_3\dot{\rho}_1 \qquad\qquad (3.6)$$

For the second possibility we obtain:

$$a_1 = -\dot{\omega}_3\rho_2 + \omega_1\omega_2\rho_2 - 2\omega_3\dot{\rho}_2 = (-\dot{\omega}_3 + \omega_1\omega_2)\rho_2 - 2\omega_3\dot{\rho}_2 \qquad (3.7)$$

In the right hand side of equations (3.4), (3.5), (3.6), (3.7), we see that there are two expressions, one depending on the position vector $\rho$, and one on the velocity vector, $\dot{\rho}$. The term dependent on $\dot{\rho}$ is also dependent on one angular velocity component. The term dependent on $\rho$ is also dependent on the other two components of the angular velocity vector, and on a component of the angular acceleration that is parallel to the angular velocity component that multiplies $\dot{\rho}$.

Since we are dealing with a vibrating system, $\rho$ and $\dot{\rho}$ have a periodic time dependence and have a 90 degree phase shift between them. Thus, we can measure separately the signal that is dependent on $\rho$ and the signal that is dependent on $\dot{\rho}$. Simultaneously measuring the three signals dependent on $\dot{\rho}$, we simultaneously obtain the three components of the angular velocity vector. Thus, by knowing all three angular velocity components, and by measuring the acceleration in all gyroscopes, we can extract all three components of the angular acceleration vector.

To put this into more concrete terms, let us assume (without loss of generality) that the time dependence of the velocity is $\dot{\rho} = \mathbf{v}^{(0)} \cos \Omega t$, where $\mathbf{v}^{(0)}$ is the maximum of the velocity and $\Omega$ is the angular frequency of the excitation, i.e., the actuation. Then $\rho = (\mathbf{v}^{(0)} / \Omega) \sin \Omega t$. Inserting this into eqs. (3.4) to (3.7), it is readily seen that each spatial component of the acceleration $\mathbf{a}$ has a contribution of the form $C_c \cos \Omega t$ and a contribution of the form $C_s \sin \Omega t$ with coefficients $C_c$ and $C_s$. Both coefficients can be determined independently by determining the acceleration by phase-sensitive means as are well known in the art. From the coefficient $C_c$ and the known or measured maximum of the velocity, a component of the angular velocity vector can be determined for each gyroscope by a simple division. Inserting the so-determined components (for the case of non-orthogonal gyroscopes, after appropriate transformation into an orthogonal coordinate system as is well known in mathematics) into eqs. (3.4) to (3.7), one can see that the angular acceleration can now be determined from the coefficients $c_s$, the angular velocity vector, the maximum of the velocity $\dot{\rho}$, and the actuation frequency $\Omega$.

The above-mentioned procedure can readily be realized by software or preferably by hardware. If the gyroscopes are not mutually orthogonal, the results can be obtained by making use of well-known basis transformations.

It should be noted that not simultaneously measuring all three components of the angular velocity may lead to an error if the phase relationship between the actuating velocity and the sensed acceleration is not taken into account. Observing any of equations (3.4) to (3.7) shows that in general all three components of the angular velocity vector affect all the gyroscopes.

**Claims**

1. Gyroscope (3) comprising

   - at least one anchor (303);
   - a first elongated elastic member (301) having a long axis defining a first direction (x) and having two ends, each end being connected to an anchor (303), said member (301) being capable of flexural vibration along an actuation direction perpendicular to said first direction; and
   - a second elongated elastic member (302) having a long axis defining a second direction (y) and being connected to said first elongated elastic member (301), said second direction being parallel to the actuation direction, and said second elongated elastic member being capable of flexural vibration along a sensing direction parallel to said first direction.

2. Gyroscope according to claim 1, **characterized in that** the second elongated elastic member (302) is connected to the first elongated elastic member (301) at one end of the second elongated elastic member (302).

3. Gyroscope according to claim 1 or 2 **characterized in that** the first elongated elastic member (301) and the second elongated elastic member (302) are fabricated from a single piece of material.

4. Gyroscope according to one of claims 1 to 3, **characterized in that** the unit comprised by the first elongated elastic member (301) and the second elongated elastic member (302) has a first eigenmode consisting essentially of a flexural vibration of the first elongated elastic member (301) together with a rigid-body movement of the second elongated elastic member (302) in the actuation direction with a first eigenfrequency, and a second eigenmode consisting essentially of a vibration of the second elongated elastic member (302) in the sensing direction with a second eigenfrequency, and that the first and second eigenfrequencies closely match.

**5.** Gyroscope according to one of claims 1 to 4, **characterized in that** the anchor (303) comprises a planar one-piece frame defining a plane, and that said plane is approximately parallel to the first direction (x) and to the second direction (y).

**6.** Gyroscope according to claim 5, **characterized in that** it further comprises a support (305) and a plurality of elastic connections (304), the frame being connected to the support (305) by the elastic connections (304).

**7.** Gyroscope according to one of claims 1 to 6, **characterized in that** it is fabricated using a low-ohmic monocrystalline silicon-on-insulator wafer defining a wafer plane, and that the first direction (x) and the second direction (y) are parallel to the wafer plane.

**8.** Gyroscope according to claim 7, **characterized in that** the first direction (x) or the second direction (y) is parallel to the (1 0 0) or (1 1 0) crystal direction.

**9.** Gyroscope according to one of claims 1 to 8, **characterized in that** it comprises a substrate and a cover arranged above the substrate and connected to the substrate in such a way that the substrate and the cover form an airtight chamber encapsulating the first and second elongated elastic members (310, 302).

**10.** Gyroscope according to one of claims 1 to 9, **characterized in that** it comprises

- means (307; 323) for exciting flexural vibrations of the first elongated elastic member (301) along the actuation direction;
- means (307; 320, 321, 323) for detecting flexural vibrations of the first elongated member (301) along the actuation direction; and
- means (31; 314, 315) for detecting flexural vibrations of the second elongated elastic member (302) along the sensing direction.

**11.** Gyroscope according to claim 10, **characterized in that** the means (307; 320, 321, 323) for exciting and/or detecting flexural vibrations of the first elongated elastic member and/or the means (314, 315) for detecting flexural vibrations of the second elongated elastic member (302) comprises a comb drive.

**12.** Gyroscope according to claim 10, **characterized in that** the means (31) for detecting flexural vibrations of the first or second elongated elastic member (302) comprises two or more electrodes (308, 309) arranged above the plane defined by the first and second direction.

**13.** Gyroscope (1) comprising

- an anchor (100);
- an elongated elastic member (101; 201) having a long axis defining a first direction (y) and two ends, one end being connected to said anchor (100), the elongated elastic member (101) being capable of flexural vibration along an actuation direction (x) and along a sensing direction (z), the actuation direction (x), the sensing direction (z) and the first direction (y) being mutually orthogonal;
- means (104, 105) for exciting flexural vibrations along the actuation direction; and
- means (104, 105; 108, 109; 11) for detecting flexural vibrations along the sensing direction.

**14.** Gyroscope according to claim 13, **characterized in that** it is fabricated using a low-ohmic monocrystalline silicon-on-insulator wafer defining a wafer plane, and that the first direction (y) and the actuation direction (x) are parallel to the wafer plane.

**15.** Gyroscope according to claim 13 or 14, **characterized in that** the means (104, 105) for exciting flexural vibrations along the actuation direction and/or the means (104, 105; 108, 109) for detecting flexural vibrations along the sensing direction comprise at least one pair of comb drives arranged symmetrically around the elongated member.

**16.** Gyroscope according to one of claims 13 to 15, **characterized in that** it comprises a substrate and a cover arranged above the substrate and connected to the substrate to form an airtight chamber encapsulating the elongated elastic member (101).

**17.** Device for determining all three components of the angular velocity vector and/or of the angular acceleration vector, wherein the device is fabricated using a single silicon-on-insulator wafer defining a wafer plane, which comprises a first, a second and a third gyroscope arranged on said wafer, wherein each of the first and the second gyroscopes is capable of determining a different component of the angular velocity vector parallel to the wafer plane, and wherein the third gyroscope is capable of determining a component of the angular velocity vector perpendicular to the wafer plane.

**18.** Device according to claim 18, **characterized in that** each of the first and second gyroscopes is a gyroscope according to claim 15, and that the third gyroscope is a gyroscope according to claim 8, and that the first and second gyroscopes are arranged such that the actuation directions of the first and second gyroscopes are perpendicular.

**19.** Method for determining angular motion with a gyroscope (3) according to one of claims 1 to 12, comprising the following steps:

- exciting the first elongated member (301) to perform flexural vibrations along the actuation direction;
- detecting flexural vibrations of the second elongated member (302) along the sensing direction.

**20.** Method according to claim 19, **characterized in that** the step of exciting the first elongated elastic member (301) and the step of detecting flexural vibrations of the second elongated elastic member (302) are performed consecutively and repeatedly.

**21.** Method according to claim 19, **characterized in that** the step of exciting the first elongated elastic member (301) and the step of detecting flexural vibrations of the second elongated elastic member (302) are performed simultaneously.

**22.** Method for determining angular motion with a gyroscope according to one of claims 14 to 17, comprising the following steps:

- exciting the elongated member (101) to perform flexural vibrations along the actuation direction (x);
- detecting flexural vibrations of the elongated member (101) along the sensing direction (z).

**23.** Method for determining angular motion with a gyroscope (1) according to claim 16, comprising the following steps:

- exciting the elongated member to perform flexural vibrations along the actuation direction;
- detecting capacitance changes in the at least one pair of comb drives (104, 105; 108, 109);
- determining the capacitance changes caused by flexural vibrations of the elongated elastic member (102) along the sensing direction (z) by comparing the capacitance changes in each of the pair of comb drives (104, 105; 108, 109).

**24.** Method for determining three spatial components of the angular velocity vector and three spatial components of the angular acceleration vector, in which a first, a second, and a third gyroscope is employed, in which each gyroscope comprises a structure capable of vibrating with a periodically time-dependent velocity in an actuation direction, in which each gyroscope further comprises a means for determining an acceleration of said structure in a sensing direction perpendicular to the actuation direction, which method comprises

- for each gyroscope, determining the maximum, the frequency and the phase of the time-dependent velocity in the actuation direction;
- for each gyroscope, determining the periodic component of the acceleration in the sensing direction that is in-phase with the velocity in the actuation direction;
- for each gyroscope, determining the periodic component of the acceleration in the sensing direction that is out-of-phase by 90 degrees relative to the velocity in the actuation direction;
- for each gyroscope, determining the component of the angular velocity in a direction orthogonal to both the actuation and the sensing direction from the periodic component of the acceleration in the sensing direction that is in-phase with the velocity in the actuation direction and from the maximum of the velocity in the actuation direction;
- for each gyroscope, determining the component of the angular acceleration in a direction orthogonal to both the actuation and the sensing direction from the periodic component of the acceleration in the sensing direction that is out-of-phase by 90 degrees relative to the velocity in the actuation direction, from the maximum of the velocity in the actuation direction, from the frequency of the velocity in the actuation direction, and from the components of the angular velocity determined from the other two gyroscopes.

25. Method according to claim 25, **characterized in that** the gyroscopes are arranged such that the component of the angular velocity determined by each gyroscope is orthogonal to the components determined by the other two gyroscopes.

26. Method according to claim 25 or 26, **characterized in that** the first and second gyroscopes are gyroscopes according to claim 15, and the third gyroscopes is a gyroscope according to claim 8.

EP 1 498 692 A1

# Fig. 1

18

Fig. 2

# Fig. 3

Fig. 4

Fig. 5

Fig. 6

Fig. 7

Fig. 8

Fig. 9

α.

1008

1001

1002

1007

1003

1005

1006

1004

# Fig. 10

1102

1103

1101

Fig. 11

δA₁

h

y₁

Fig. 12 A

δA₂

y₂

overlap

Fig. 12 B

δA₁

y₂

δA₂

y₁

Fig. 12 C

y₁

δA₁

h

y₂

δA₂

overlap

Fig. 12 D

## EUROPEAN SEARCH REPORT

**European Patent Office**

**Application Number**

EP 03 40 5552

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 604 311 A (KUMAR LALIT ET AL) 18 February 1997 (1997-02-18) * column 1, line 7 - line 9 * * column 2, line 50 - column 5, line 63; figures 1A,1B,2A,2B,3,4,5 * | 1-12, 19-21 | G01C19/56 |
| A | US 4 710 668 A (JANIAUD DENIS ET AL) 1 December 1987 (1987-12-01) * column 4, line 40 - column 6, line 68; figures 5A,,5B,,6A,,6B,,6C,,7 * | 1-12, 19-21 | |
| A | EP 0 930 482 A (NGK INSULATORS LTD) 21 July 1999 (1999-07-21) * page 7, line 6 - page 8, line 16; figures 6-8 * | 1-12, 19-21 | |
| A | PATENT ABSTRACTS OF JAPAN vol. 1997, no. 09, 30 September 1997 (1997-09-30) & JP 09 133532 A (MURATA MFG CO LTD), 20 May 1997 (1997-05-20) * abstract * | 1-12, 19-21 | |

| TECHNICAL FIELDS SEARCHED (Int.Cl.7) |
|---|
| G01C G01P |

~~The present search report has been drawn up for all claims~~

| Place of search | Date of completion of the search | Examiner |
|---|---|---|
| Munich | 15 December 2003 | Springer, O |

European Patent
Office

**Application Number**

EP 03 40 5552

## CLAIMS INCURRING FEES

The present European patent application comprised at the time of filing more than ten claims.

☐ Only part of the claims have been paid within the prescribed time limit. The present European search report has been drawn up for the first ten claims and for those claims for which claims fees have been paid, namely claim(s):

☐ No claims fees have been paid within the prescribed time limit. The present European search report has been drawn up for the first ten claims.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-12, 19-21

**European Patent Office**

**LACK OF UNITY OF INVENTION**
**SHEET B**

**Application Number**

EP 03 40 5552

The Search Division considers that the present European patent application does not comply with the requirements of unity of invention and relates to several inventions or groups of inventions, namely:

1. claim: 1 to 12 and 19 to 21

   Gyroscope and method for determining an angular motion. The gyroscope comprises a first elongated elastic member where each end of the member is connected to an anchor. The first member is driven to a flexural vibration in a driving direction perpendicular to its length. A second elongated elastic member is connected perpendicular to the first member and is arranged for carrying out flexural vibrations along a sensing direction perpendicular to the driving direction.

   ---

2. claims: 13 to 16, 22 and 23

   Gyroscope and method for determining an angular motion. The gyroscope comprises an elongated elastic member having one end connected to an anchor. The member is excited to flexural vibrations in a first (excitation) direction by exciting means and is arranged for carrying out flexural vibrations in a second (detecting) direction by detecting means.

   ---

3. claims: 17, 18 and 24 to 26

   Device and method for determining all three components of the angular velocity/acceleration vector comprising three gyroscopes for the three components using a single silicon-on-insulator wafer.

   ---

**ANNEX TO THE EUROPEAN SEARCH REPORT
ON EUROPEAN PATENT APPLICATION NO.**                    EP 03 40 5552

This annex lists the patent family members relating to the patent documents cited in the above-mentioned European search report.
The members are as contained in the European Patent Office EDP file on
The European Patent Office is in no way liable for these particulars which are merely given for the purpose of information.

15-12-2003

| Patent document cited in search report | | Publication date | Patent family member(s) | | Publication date |
|---|---|---|---|---|---|
| US 5604311 | A | 18-02-1997 | NONE | | |
| US 4710668 | A | 01-12-1987 | FR | 2574209 A1 | 06-06-1986 |
| | | | DE | 3576024 D1 | 15-03-1990 |
| | | | EP | 0194394 A1 | 17-09-1986 |
| | | | JP | 61138115 A | 25-06-1986 |
| EP 0930482 | A | 21-07-1999 | JP | 11173857 A | 02-07-1999 |
| | | | CA | 2222232 A1 | 26-05-1998 |
| | | | CN | 1184937 A ,B | 17-06-1998 |
| | | | DE | 69718994 D1 | 20-03-2003 |
| | | | DE | 69718994 T2 | 30-10-2003 |
| | | | EP | 0844461 A2 | 27-05-1998 |
| | | | EP | 0930482 A2 | 21-07-1999 |
| | | | US | 6186003 B1 | 13-02-2001 |
| | | | US | 2003084723 A1 | 08-05-2003 |
| | | | US | 6346765 B1 | 12-02-2002 |
| | | | US | 6651498 B1 | 25-11-2003 |
| | | | US | 2001043026 A1 | 22-11-2001 |
| | | | US | 5998911 A | 07-12-1999 |
| | | | US | 6018212 A | 25-01-2000 |
| | | | CA | 2252655 A1 | 04-05-1999 |
| | | | CN | 1224149 A ,B | 28-07-1999 |
| | | | EP | 0915322 A2 | 12-05-1999 |
| | | | JP | 11281372 A | 15-10-1999 |
| | | | US | 6227048 B1 | 08-05-2001 |
| | | | US | 2001001928 A1 | 31-05-2001 |
| JP 09133532 | A | 20-05-1997 | NONE | | |

EPO FORM P0459

For more details about this annex : see Official Journal of the European Patent Office, No. 12/82